# EUROPEAN PATENT APPLICATION

(11) **EP 3 431 556 A1**
(43) Date of publication of application: **23.01.2019**
(21) Application number: 17722077.9
(22) Date of filing: 10.03.2017
(51) Int. Cl.: C09D 11/101, C09D 11/322, C09D 11/106

(54) **METHOD FOR PRODUCING A DIGITAL INKJET PRINTING INK, AND THUS OBTAINED DIGITAL INKJET PRINTING INK**

(30) Priority: 15.03.2016 ES 201630308
(71) Applicant: KAO CORPORATION, Tokyo 103-8210 (JP)
(72) Inventor: MARCÉ TORRA, Armand, 08191 Rubí (Barcelona) (ES); FERNÁNDEZ LÓPEZ, Juan Carlos, 08191 Rubí (Barcelona) (ES)
(74) Representative: Hoffmann Eitle
(86) International application number: PCT/ES2017/070136
(87) International publication number: WO 2017/158217

(57) **Abstract**

It comprises the following phases: a first phase in which a pigment paste is manufactured; a second pre-grinding phase; a third grinding phase; a fourth phase, in which the pigment paste is transformed into ink by diluting it with a mixture of monomers, oligomers, additives and low-migration photoininiators.

## Description

Procedure for the manufacture of a digital printing ink and the inkjet-type digital printing ink thus obtained of the type comprising the following phases: a first phase in which a pigment paste is produced with the following components and proportions: - between 1% and 15% of at least one pigment, between 1% and 30% of at least one oligomer, between 0.5% and 10% of at least one dispersant, between 0.1% and 5% of additives and between 40% and 97% of a mixture of oligomers, monomers and/or resins of various types; a second phase of pre-grinding, in which the pigment paste of the first phase is subject to a pre-grinding process, wherein said pigment paste is passed through an immersion mill and a cooling circuit until a particle size of less than 3 microns is achieved; a third phase of grinding, in which the pigment paste of phase two, with a particle size of less than 3 microns is passed through said cooling circuit and then through a ball mill until the desired pigment particle size of the pigment paste is obtained; a fourth phase, in which the pigment paste is transformed into ink by diluting it with a mixture of monomers, oligomers, additives and low-migration photoininiators.

### BACKGROUND OF THE INVENTION

Several patents are known in the state of the art that refer to inkjet-type digital printing inks.

Thus, Spanish Patent 201330751 (ES2523397) "INK COMPOSITION FOR INKJECT PRINTING", in the name of Fundació CETEMMSA, from 2013, refers to a composition for ink-jet printing, in which the invention composition comprises: (a) polyethylene glycol with a molecular weight of between 20,000 (20k) and 50,000 (50k) in a concentration of between 0.5 and 15% by weight/volume. (b) a general formula, non-ionic surfactant (I) where "n" is comprised between 5 and 40 and said surfactant is in a concentration between 0.1 and 1.0% by volume/volume; and (c) one or more ingredients selected from a liquid vehicle, a binder and an additive suitable for printing. The composition of the invention is employed in the printing of molecules with biological interest.

Also European Patent 2451648 "HIGH-VISCOSITY THERMOSENSITIVE INK PRINTING PROCEDURE" in the name of SAWGRASS TECHNOLOGIES, INC from 2010is known, which refers to a printing method of a design by means of an ink-jet printer that uses heat-activated colorant solids and includes the following phases: preparation of a liquid ink suitable for use in an inkjet printer that uses liquid ink, said liquid ink comprises water, solid particles of heat-activated colorant and an viscosity control agent, wherein the ink has a viscosity of not less than 6.0 MPa·s (centipoise),and the heat-activated colorant solids are barely soluble in the viscosity control agent; ink supply to the inkjet printer that prints liquid ink with said liquid ink, printing of said liquid ink on a desired image by means of said inkjet printer on a substrate to form an image, wherein the solid particles of heat-activated colorant are solid at the moment of printing; and heat activation of the heat-activated colorant solids, wherein, after heat activation, the image has an optical density of not less than 1.25 when measured with an XRite densitometer, characterised in that the viscosity control agent comprises no less than 15% in weight of the liquid ink and not less than 95% of the heat-activated colorant solid particles have a diameter of 0.05 microns or greater.

The state of the art also includes European Patent 2206753, "WHITE INKJET INK IMPROVED FOR DISPERSION STABILITY" in the name of AGFA GRAPHICS N.V., from 2007, which refers to a colour inkjet cartridge that comprises a white ink that contains a pigment having a refraction index greater than 1.60 and at least one colour inkjet ink characterised in that the white inkjet ink viscosity is at least 4 mPa·s greater than the viscosity of the colour inkjet ink in which the viscosity is measured at 40 °C with a Brookfield DV-II+Pro at 12 revolutions per minutes and also characterised in that the white ink contains at least 25% by weight of a white pigment in relation to the total weight of the white ink.

European Patent 1557448, "WET GRINDING PROCESS USING MICROBEADS", from 2005, in the name of DAINICHISEIKA COLOR & CHEMICALS MFG. CO., LTD., refers to the production process of inkjet printing ink that comprises an aqueous pigment dispersion and which also comprises at least one additive selected from the group that consists of film-forming polymers, reticulant agents, film-forming adjuvants, pH-adjusting agents, surfactants, ejector drying inhibitors, thickeners, defoaming agents, preservatives, slimicides and antibiotics, comprising (A) the fine dispersing of a pigment in a pigment dispersion mixture obtained by mixing at least one pigment and one dispersant in an aqueous medium with beads having diameters of between 0,5 mm and 2 mm so that said pigment forms fine particles that have a mean particle size of 100 nm to 500 nm; and (B), ultra-fine dispersing of the pigment dispersion mixture obtained in phase (A) with micro-beads having diameters of not less than 0.02 mm, but less than 0.2 mm, in which the said pigment dispersion mixture is dispersed in an ultra-fine manner in a ring mill in order to produce the aqueous pigment dispersion, in which said ultra-fine dispersion is executed to satisfy the following inequality (1): 0.005 < L/X < 0.01 (1), in which L is an efficient capacity of the mill in litres and "X" is a flow rate in litres per hour of said pigment dispersion mixture through the ring mill.

Lastly, the Patent WO2014126720 "LOW MIGRATION ENERGY CURABLE INKS", from 2014 in name of SUN CHEMICHAL CORP et al. Is worth to be mentioned, which refers to a pigmented liquid composition for inkjet printers, comprising a free radical and ultraviolet curing for printing on food-packaging materials, which, when cured in the air at ambient temperature produces only minor contamination of food products. This composition employs non-polymer photoininiators that have a molecular weight of less than 500 amu that migrate to levels below the specified SML (limit of the specific migration).

### BRIEF DESCRIPTION OF THE INVENTION

This invention relates to the digital inkjet printing ink sector.

The closest document is the European Patent 1557448. It describes a wet grinding process using ball mill.

The ball mills have been employed in the ink sector for a long time, in fact CHIMIGRAF has been using them since before 2004.

Said patent resolves the problem on how to store aqueous inks and reduce the size of the pigment particles for its storage.

The problem of said patent is that when said ink is applied over a head it is done by means of spraying which affects the print job quality.

Similarly, if carrying out a work of more precise detail, the drop is not deposited perfectly, but instead, in a series of small drops of different sizes that the head touches, so it must be continually cleaned.

Patent WO2014126720 is also worth to be mentioned. Said patent employs difunctional monomers as reagents (DPGDA), which means it has low viscosity, however, it would not comply with Nestlé's standards.

In order to improve product quality in this invention it should be obvious that this is an aqueous ink present here, therefore no concern should be in case of the ink not being correctly deposited on the substrate.

Moreover, it may be used in high-speed printers, with the printed results being of equally excellent quality.

This also enables to use the obtained ink in the food industry without any concern, after a testing of migration in the specific substrate and of the printer curing conditions.

Lastly, the pigment concentration is lower, contrary to what occurs in the state of art, and this is achieved by the use of oligomer that is employed to reduce the pigment particle size in a more efficient manner.

This invention presents a mixture of monomers and oligomers. The oligomers are highly reactive in the ink so that they are 100% polymerised when they are cured. Furthermore, because of the high viscosity, the inventor has employed monomers to dilute the ink and thus reduce the oligomer viscosity. The monomer also enhances the adhesion of the ink to the substrate.

Moreover, resins are used because they improve the ink drop formation that is essential in a single-pass model printer, which are high-speed printers. This is why the ink drop has high consistency and does not break, which is achieved in combination with the resin of this invention. If another additive were used, the ink drop might break up and it would not be precisely deposited on the paper.

The one object of this invention is a process for the manufacture of a digital printing ink, of the type that comprises the following phases: a first phase in which a pigment paste is produced with the following components and proportions: - between 1% and 15% of at least one pigment, between 1% and 30% of at least one oligomer, between 0.5% and 10% of at least one dispersant, between 0.1% and 5% of additives and between 40% and 97% of a mixture of oligomers, monomers and/or resins of various types; a second phase of pre-grinding, in which the pigment paste of the first phase undergoes a pre-grinding process, wherein said pigment paste is passed through an immersion mill and a cooling circuit until the a particle size of less than 3 microns is achieved; a third phase of grinding, in which the pigment paste of phase 3, with a particle size of less than 3 microns is passed through said cooling circuit and then through a ball mill until the desired pigment particle size of the pigment paste is obtained; a fourth phase, in which the pigment paste is transformed into ink by diluting it with a mixture of monomers, oligomers, additives and low-migration photoininiators.

An additional object of this invention is an obtained ink in accordance with the previous process, characterised in that it comprises: - between 1% and 10% of pigment, between 5% and 20% of oligomers, between 0.5% and 7% of vinyl or acrylic type resins, between 55% and 80% of monofunctional and/or difunctional and/or trifunctional types of monomers, between 8% and 20% of low-migration photoininiators, between 0.1% and 5% of additives, among which are TS modifiers, polymerisation inhibitors and between 1% and 7% of dispersant additives, resulting in an ink with a viscosity of between 20 and 28 cP at 25 °C, between 9.5 and 15 cP at between 35-40 °C and 10.5-12 cP at 45 °C, wherein the surface tension being between 25 and 35 dynes per cm and the particle size of all colours must be below 1 micron.

### SPECIFIC EXEMPLARY EMBODIMENT OF THIS INVENTION

It must be previously indicated that the percentages are by weight and of the total both in the description and in the claims.

Thus, in a specific exemplary embodiment, the process for the manufacture of a digital printing ink is **characterised** in that it comprises the following phases:
A first phase in which a pigment paste is produced with the following components and proportions: between 1% and 15% of at least one pigment, between 1% and 30% of at least one oligomer, between 0.5% and 10% of at least one dispersant, between 0.1% and 5% of additives and between 40% and 97% of a mixture of oligomers, monomers and resins of various types.

Said paste is taken to a second phase in which the pre-grinding is performed. Thus, the pigment paste of the first phase passes through an immersion mill and also through a cooling circuit until it is obtained a particle size of less than 3 microns.

The advantage of this type of mill is that when the pigment paste is removed from the basket, said pigment paste already begins to cool, requiring the paste to remain in the cooling circuit for a shorter period of time.

A third phase of grinding, in which the pigment paste of the second phase, with a particle size of less than 3 microns is passed through said cooling circuit and then through a ball mill until the desired pigment particle size of the pigment paste is obtained.
Having the pigment paste a low viscosity means that the use of a ball mill is ideal, with the advantage that of more grinding time means a greater increase in dispersant action and also that there are no losses of volatile material during said phase.

Lastly, in a fourth phase, the pigment paste is transformed into ink by diluting it with a mixture of monomers, oligomers, additives and low-migration photoininiators.

Optionally, a fifth phase may be employed in which the pigment paste of the fourth phase passes through a filtration unit which retains all the paste that does not have the desired particle size.

The ink, obtained in the previous process, comprises:
- between 1% and 10% of pigment,
- between 5% and 20% of oligomers,
- between 0,5% and 7% of vinylic or acrylic resins,
- between 55% and 80% of monofunctional and/or difunctional and/or trifunctional types of monomers,
- between 8 % and 20 % of low-migration photoininiators,
- between 0.1% and 5% of additives, among which are TS modifiers and polymerisation inhibitors,
- between 1% and 7% of dispersant additives.

This results in an ink with a viscosity of between 20 and 28 cP at 25 °C, between 9.5 and 15 cP at 35-40 °C and 10.5-12 cP at 45 °C, with the surface tension being between 25 and 35 dynes per cm and the particle size of all colours must be below 1 micron.

As previously indicated, this ink has the advantage of complying with Nestlé's standards because the ink does not migrate, so employing said ink on food packaging would not contaminate the food inside the packet.

For this reason the oligomers of highly reactivity are employed in the ink, so that they are 100% polymerised when they are cured. Thus, said oligomers do not contaminate because they are polymerised when cured with UV light being applied.

However, said oligomers increase viscosity, which makes it difficult to employ ball mills. In order to resolve this problem, monomers are added to dilute the ink and, in this way, reduce the oligomer viscosity. Another monomer advantage is that they improve the ink adhesion to the substrate.

Another important component employed is resins. These inks may be employed in high-speed printers of the "single-pass" type. This allows printing with just one pass and therefore saving a lot of time.

In order to achieve this, the inventor has verified that ink-drop formation is enhanced by employing resins.

The employment of resins means that the ink drop has high consistency and it does not break up. If another additive is employed, the ink drop might break up and not be accurately deposited on the paper, thus dirtying both the substrate and the print head.

Optionally, to facilitate dispersion, the colour particle size is configured to be less than
250 nm.

The black pigment particle size may be less than 150 nm.

A series of formulation examples is provided below, with cyan, black, magenta and yellow inks.
**EXAMPLE 1 (BLACK INK)**

| Component | % of total weight |
|---|---|
| Photoinitiator type 1 | 2.5 |
| Photoinitiator type 2 | 5 |
| Photoinitiator type 3 | 4 |
| Oligomer | 5 |
| Pigment | 5.0 |
| Dispersant | 2.9 |
| Difunctional monomer | 40 |
| Monofunctional monomer | 30.6 |
| Resin | 4 |
| Additives | 1 |

**EXAMPLE 2 (BLACK INK)**

| Component | % of total weight |
|---|---|
| Photoinitiator type 1 | 5 |
| Photoinitiator type 2 | 10 |
| Photoinitiator type 3 | 2 |
| Oligomer | 10 |
| Pigment | 4.5 |
| Dispersant | 2.6 |
| Difunctional monomer | 30 |
| Monofunctional monomer | 32.9 |
| Resin | 2 |
| Additives | 1 |

**EXAMPLE 3 (BLACK INK)**

| Component | % of total weight |
|---|---|
| Photoinitiator type 1 | 3 |
| Photoinitiator type 2 | 6 |
| Photoinitiator type 3 | 4 |
| Oligomer | 5 |
| Pigment | 5.0 |
| Dispersant | 2.9 |
| Difunctional monomer | 40 |
| Monofunctional monomer | 30.1 |
| Resin | 3 |
| Additives | 1 |

**EXAMPLE 4 (CYAN INK)**

| Component | % of total weight |
|---|---|
| Photoinitiator type 1 | 3 |
| Photoinitiator type 2 | 6 |
| Photoinitiator type 3 | 4 |
| Oligomer | 5 |
| Pigment | 5.0 |
| Dispersant | 2.9 |
| Difunctional monomer | 40 |
| Monofunctional monomer | 30.1 |
| Resin | 3 |
| Additives | 1 |

**EXAMPLE 5 (CYAN INK)**

| Component | % of total weight |
|---|---|
| Photoinitiator type 1 | 4 |
| Photoinitiator type 2 | 8 |
| Photoinitiator type 3 | 2 |
| Oligomer | 10 |
| Pigment | 4.5 |
| Dispersant | 2.6 |
| Difunctional monomer | 30 |
| Monofunctional monomer | 36.4 |
| Resin | 1.5 |
| Additives | 1 |

**EXAMPLE 6 (CYAN INK)**

| Component | % of total weight |
|---|---|
| Photoinitiator type 1 | 1 |
| Photoinitiator type 2 | 10 |
| Photoinitiator type 3 | 1.5 |
| Oligomer | 15 |
| Pigment | 4.0 |
| Dispersant | 2.3 |
| Difunctional monomer | 10 |
| Monofunctional monomer | 54.2 |
| Resin | 1 |
| Additives | 1 |

**EXAMPLE 7 (YELLOW INK)**

| Component | % of total weight |
|---|---|
| Photoinitiator type 1 | 2.5 |
| Photoinitiator type 2 | 5 |
| Photoinitiator type 3 | 3 |
| Oligomer | 5 |
| Pigment | 5.0 |
| Dispersant | 3.3 |
| Difunctional monomer | 38 |
| Monofunctional monomer | 34.7 |
| Resin | 2.5 |
| Additives | 1 |

**EXAMPLE 8 (YELLOW INK)**

| Component | % of total weight |
|---|---|
| Photoinitiator type 1 | 3 |
| Photoinitiator type 2 | 4 |
| Photoinitiator type 3 | 3.5 |
| Oligomer | 10 |
| Pigment | 4.5 |
| Dispersant | 3.0 |
| Difunctional monomer | 29 |
| Monofunctional monomer | 40.0 |
| Resin | 2 |
| Additives | 1 |

**EXAMPLE 9 (YELLOW INK)**

| Component | % of total weight |
|---|---|
| Photoinitiator type 1 | 4 |
| Photoinitiator type 2 | 2 |
| Photoinitiator type 3 | 4 |
| Oligomer | 15 |
| Pigment | 4.0 |
| Dispersant | 2.6 |
| Difunctional monomer | 11 |
| Monofunctional monomer | 55.4 |
| Resin | 1 |
| Additives | 1 |

**EXAMPLE 10 (MAGENTA INK)**

| Component | % of total weight |
|---|---|
| Photoinitiator type 1 | 3 |
| Photoinitiator type 2 | 4 |
| Photoinitiator type 3 | 4 |
| Oligomer | 5 |
| Pigment | 6.0 |
| Dispersant | 5.4 |
| Difunctional monomer | 35.0 |
| Monofunctional monomer | 33.1 |
| Resin | 3.5 |
| Additives | 1 |

**EXAMPLE 11 (MAGENTA INK)**

| Component | % of total weight |
|---|---|
| Photoinitiator type 1 | 5 |
| Photoinitiator type 2 | 2.5 |
| Photoinitiator type 3 | 3 |
| Oligomer | 10 |
| Pigment | 5.5 |
| Dispersant | 5.0 |
| Difunctional monomer | 31 |
| Monofunctional monomer | 35.0 |
| Resin | 2 |
| Additives | 1 |

**EXAMPLE 12 (MAGENTA INK)**

| Component | % of total weight |
|---|---|
| Photoinitiator type 1 | 2.5 |
| Photoinitiator type 2 | 4.5 |
| Photoinitiator type 3 | 4 |
| Oligomer | 15 |
| Pigment | 5.0 |
| Dispersant | 4.5 |
| Difunctional monomer | 12 |
| Monofunctional monomer | 50.0 |
| Resin | 1.5 |
| Additives | 1 |

This invention of the present patent describes a procedure for the manufacture of a digital inkjet-type printing ink and the digital printing ink thus obtained. The exemplary embodiments mentioned here do not limit this invention and thus, can have various applications and/or adaptations, all of which are within the scope of the following claims.

## Claims

1. A procedure for the manufacture of digital printing ink, **characterised in that** it comprises the following phases:
a) a first phase in which a pigment paste is produced with the following components and proportions:
- between 1% and 15% of at least one pigment,
- between 1% and 30% of at least one oligomer,
- between 0.5% and 10% of at least one dispersant,
- between 0.1% and 5% of additives and,
- between 40% and 97% of a mixture of oligomers, monomers and/or resins of various types,
b) a second phase of pre-grinding, in which the pigment paste of the first phase is subject to this pre-grinding process, wherein said pigment paste is passed through an immersion mill and a cooling circuit until a particle size of less than 3 microns is achieved,
c) a third phase of grinding, in which the pigment paste of the second phase, with a particle size of less than three microns is passed through said cooling circuit and then through a ball mill until the desired pigment particle size of the pigment paste is obtained and
d) a fourth phase, in which the pigment paste is transformed into ink by diluting with a mixture of monomers, oligomers, additives and low-migration photoininiators.

2. A procedure in accordance with claim 1, **characterised in that** it comprises a fifth phase in which the ink obtained in the fourth phase is subject to a filtration process.

3. The ink obtained in the previous phase, **characterised in that** it comprises:
- between 1% and 10% of pigment,
- between 5% and 20% of oligomers,
- between 0,5% and 7% of vinylic or acrylic resins,
- between 55% and 80% of monofunctional and/or difunctional and/or trifunctional types of monomers,
- between 8 % and 20 % of low-migration photoininiators,
- between 0.1% and 5% of additives, among which are TS modifiers and polymerisation inhibitors,
- between 1% and 7% of dispersant additives,
this results in an ink with a viscosity of between 20 and 28 cP at 25 °C, between 9.5 and 15 cP at 35-40 °C and 10.5-12 cP at 45°C, wherein the surface tension being between 25 and 35 dynes per cm and the particle size of all colours must be below 1 micron.

4. An ink in accordance with claim 3, **characterised in that** the colour particle size is less than 250 nm.

5. An ink in accordance with claim 4, **characterised in that** the black particle size is less than 150 nm.
